# EUROPEAN PATENT APPLICATION

(11) **EP 3 936 971 A1**
(43) Date of publication of application: **12.01.2022**
(21) Application number: 20184667.2
(22) Date of filing: 08.07.2020
(51) Int. Cl.: G06F 1/16, G06F 3/0488, G06F 3/039

(54) **AUXILIARY APPLIANCE FOR A USER INTERFACE DEVICE**

(71) Applicant: Leica Microsystems CMS GmbH, 35578 Wetzlar (DE)
(72) Inventor: Sieckmann, Frank, 75031 Eppingen (DE)
(74) Representative: Schaumburg und Partner Patentanwälte mbB

(57) **Abstract**

An auxiliary appliance (200, 300) for a user interface device (102) having a touch sensitive screen (108) is provided. The auxiliary appliance (200, 300) comprising at least one haptic control element (212, 312a, 312b) configured to be manually operated by a user, an attachment portion (202, 302) configured to be attached to the user interface device (102) for superimposing the haptic control element (212, 312a, 312b) on the touch sensitive screen (108) of the user interface device (102) in a predetermined screen area (110) where a touch control element (112) is provided on the touch sensitive screen (108), said touch control element (112) being operable by touching the touch sensitive screen (108) in said predetermined screen area (110). The haptic control element (212, 312a, 312b) comprises a touch portion (216, 316a, 316b) configured to touch the touch sensitive screen (108) in said predetermined screen area (110) for operating the touch control element (112) in response to a manual user operation of the haptic control element (212, 312a, 312b) when the attachment portion (202, 302) is attached to the user interface device (102).

## Description

### Technical field

The present invention relates to an auxiliary appliance for a user interface having a touch sensitive screen. The present invention further relates to a user interface device for controlling an apparatus using an auxiliary device, and a method for controlling a user interface device.

### Background

User interface devices as for example tablet computers or smartphones have become powerful tools which may be used for controlling various types of technical devices. Such a user interface device comprises a touch sensitive screen which serves both as an input device and an output device. Specifically, graphical control elements are displayed on the touch sensitive screen, and by touching the graphical control elements with a special stylus or one or more fingers, a user can input data and control signals which are transmitted to the technical device which is to be control which by means of the user interface device.

Regardless of whether the graphical control elements displayed on the touch sensitive screen are operated with the fingers or a stylus, controlling the device by means of the touch sensitive screen always requires a visual check by the user. Thus, the user is not enabled to control the device via the touch sensitive screen while focusing his attention exclusively on another system component. For instance, when using a touch sensitive screen in a car, a driver cannot operate the touch sensitive screen without temporarily taking his attention away from the traffic when looking at the touch sensitive screen. Accordingly, dangerous traffic situations may arise. Similarly, in the field of microscopy, a user controlling the microscope via a touch sensitive screen is not enabled to simultaneously look through the eyepieces of the microscope. Alternately focusing his attention on the touch sensitive screen and the microscope makes it difficult for the user to perform the microscopic experiment efficiently.

In order to allow a user to control a microscope without visually checking the operated control elements, so-called panel boxes may be applied which comprise physical control elements providing tactile feedback to the user. However, such a panel box is formed by a hardware component having a predefined design adapted to the specific microscope which is to be controlled by means of the panel box. Accordingly, flexibility of the panel box is low.

US 2019/0012003 A1 a discloses a user interface device for navigation of display content on a touch sensitive screen of a computer. The user interface device comprises a base which is movable relative to the touch sensitive screen, a rotary dial arranged on the base and rotatable relative to the base, and a touch sensor mechanically coupled to the base. However, this user interface device is not suitable for controlling a device without any visual evaluation by the user.

### Summary

It is an object to allow a user interface device with a touch sensitive screen to be used for controlling a technical apparatus without requiring a user to visually check the touch sensitive screen when controlling the apparatus.

The afore-mentioned object is achieved by the subject-matter according to the independent claims. Advantageous embodiments are defined in the dependent claims and the following description.

An auxiliary appliance for a user interface having a touch sensitive screen comprises at least one haptic control element configured to be manually operated by a user, an attachment portion configured to be attached to the user interface device for superimposing the haptic control element on the touch sensitive screen of the user interface device in a predetermined screen area where a touch control element is provided on the touch sensitive screen, said touch control element being operable by touching the touch sensitive screen in said predetermined screen area. The haptic control element comprises a touch portion configured to touch the touch sensitive screen in the predetermined screen area for operating the touch control element in response to a manual user operation of the haptic control element when the attachment portion is attached to the user interface device.

By means of the auxiliary appliance, a user is given the opportunity to control an apparatus by operating physical control elements which - by nature - provide tactile feedback to the user. Thus, in contrast to using the touch sensitive screen alone with its non-physical and therefore non-haptic control elements which require visual evaluation by the user, the auxiliary appliance enables the user in combination with the user interface device to operate the touch sensitive screen thereof in a haptic manner. Accordingly, there is less or even no need to visually check the touch sensitive screen of the user interface device during operation.

Both the user interface device and the auxiliary appliance can be flexibly adapted to any specific task which is to be achieved for controlling the apparatus. For instance, in the field of microscopy, the proposed solution has significant advantages compared to conventional approaches using e.g. a panel box with its predefined design adapted to the specific microscope which is to be controlled by the panel box. In contrast, the proposed combination of the user interface device and the auxiliary appliance allows a flexible change of functionality depending on the specific task, for instance by means of a simple software update of the user interface device. Further, the auxiliary appliance can be used in combination with a plurality of user interface devices, each of which being assigned to a different user and/or a different apparatus. For instance, a user may have his personal interface device storing his preferred data and settings. Then, the user may control a plurality of apparatus with his personal interface device using different data and settings assigned to the specific apparatus. For each apparatus, a specific auxiliary appliance may be provided at low cost.

Further, it may also be conceived to design a plurality of auxiliary appliances for one apparatus wherein the auxiliary appliances may e.g. be optimized with regard to specific applications for which the apparatus can be used. For instance, modern microscope systems offer a variety of applications, e.g. different microscopic and spectroscopic measurement and imaging methods. Having a set of specific auxiliary appliances, a user may change the auxiliary appliances depending on the specific application for which the apparatus is used. Such a solution is advantageous in terms of costs when compared to conventional systems using e.g. panel boxes which are more expensive to produce.

In particular, auxiliary appliances which are optimized for specific applications of an apparatus to be controlled could be used not only to configure the software of the interface device, e.g. a tablet computer. Rather, the auxiliary appliances may also configure the apparatus, e.g. a microscope according to the specific application selected by the user.

Thus, attaching the auxiliary appliance to the user interface may trigger an automatic configuration procedure and/or a procedure for switching between different applications. For instance, a suitable start configuration of the apparatus to be controlled may be set. In case that the apparatus offers a variety of applications as mentioned above, it may be conceived to deliberately design the auxiliary appliance rather simple for exclusively optimizing the appliance to one single application or only a few applications provided by the apparatus. For example, an automatic configuration may be performed in order to activate or deactivate certain laser light sources or wavelengths, to introduce optical elements such as optical filters, aperture stops, mirrors etc. into an optical path of a microscope.

The proposed auxiliary appliance provides significant advantages in any situation where it is difficult or even impossible for the user to visually grasp the information indicated on a touch sensitive screen as the user must focus his visual attention e.g. on the object to be examined. Just as an example, such a situation may occur in applications where poor lighting conditions occur as e.g. in the field of laboratory equipment or in the automotive field. Further, the auxiliary appliance may be utilized by blind or visually impaired persons, for instance for supporting barrier-free working in a laboratory.

The touch control elements may be provided on the touch sensitive screen of the user interface device in a visible or invisible manner. In particular in a case where the touch control element is hidden behind the auxiliary appliance which is attached to the user interface device, the touch control element is not required to be visibly displayed on the touch sensitive screen.

It is to be noted that the touch sensitive screen of the user interface device need not to be lid when operating the user interface device by means of the auxiliary appliance overlapping the screen. This is of advantage in situations where the user has to work in the dark, e.g. when handling light sensitive samples.

The auxiliary appliance may be made from synthetic resin. Thus, the auxiliary appliance can be easily adapted to the outer shape of the user interface device and produced at low costs.

Further, the auxiliary appliance may be configured to support inherent functions provided by the user interface device. For instance, the auxiliary appliance may support sound output provided by a speaker and/or sound input received by a microphone wherein the speaker and the microphone are part of the user interface device. Thus, an extended functionality can be achieved when combining the auxiliary appliance with the user interface device.

Preferably, the auxiliary appliance further comprises a screen cover including the at least one haptic control element. The screen cover is adapted to cover at least a part of the touch sensitive screen when the attachment portion is attached to the user interface device. In case that the screen cover spatially overlaps only a part of the touch sensitive screen, the remaining uncovered part of the touch sensitive screen may be used to display information referring to adjustments of the respective haptic control element of the auxiliary appliance and the corresponding touch control element provided by the touch sensitive screen. Alternatively, in case that the screen cover overlaps the touch sensitive screen completely, the screen cover may be formed from a transparent material so that the touch sensitive screen is visible through the screen cover. Further, the screen cover may comprise distinct windows through which portions of the touch sensitive screen are visible to the user. These screen portions may be used to display information related to the control operation. For instance, the attachment portion is formed by a slide-in sheath having an insertion opening for inserting the user interface device into an interior of the slide-in sheath. Using such a slide-in sheath enables the user to couple the auxiliary appliance and the user interface device in a simple manner.

In an alternative embodiment, the attachment portion may comprise a dual panel structure formed by a base panel and a cover panel, and a coupling device configured to detachably connect the base panel and the cover panel. The base panel is configured to accommodate the user interface device, and the cover panel is configured to cover the touch sensitive screen fully or in part when the attachment portion is attached to the user interface device. In case that the cover panel overlaps the touch sensitive screen completely, the cover panel is preferably made from a transparent material.

The coupling device may comprise at least first and second magnetic coupling elements, wherein the first magnetic coupling element is located on the base panel and the second magnetic coupling element is located on the cover panel. The first and second magnetic coupling elements are magnetically coupled to each other when the base panel and the cover panel are connected. By providing a magnetic coupling, the auxiliary appliance and the user interface device can be easily affixed to each other so that the touch sensitive screen is sandwiched between the base panel and the cover panel.

Preferably, the auxiliary appliance further comprises at least one appliance connector which is operatively connectable to at least one device connector of the user interface device for transmitting data and/or power between the auxiliary appliance and the user interface device when the attachment portion is attached to the user interface device. According to this embodiment, the user interface device may be electrically powered via the auxiliary appliance. Further, the auxiliary appliance may be provided with integrated electronic components extending the functionality of the auxiliary appliance. For instance, the auxiliary appliance may send identification data to the user interface device when being coupled to the user interface device. The identification data provided by the auxiliary appliance may e.g. be stored in a memory included in the auxiliary appliance. Alternatively or additionally, the auxiliary appliance may provide the identification in other manner, for instance in form of a barcode, a hole pattern, etc. provided on the auxiliary appliance. Based on these identification data, the user interface device may identify the auxiliary appliance. Furthermore, based on the identification data, the user interface device may be brought into a defined status and/or the user interface may start an application software module assigned to the specific auxiliary appliance and/or configure an application software module. It is to be noted that the connectivity between the auxiliary appliance and the user interface device is not limited to an electric type. Rather, also inductive and/or radio connectivity as for example near-field communication (NFC), Bluetooth, etc. may be implemented between the auxiliary appliance and the user interface device.

Although starting an application software module as mentioned above may be an advantageous feature of the system proposed herein, such a feature is to be understood merely an example and by no means mandatory. Thus, suitable software may also be started by the user before coupling the auxiliary appliance to the user interface device, for instance as a mandatory precondition which must be satisfied before coupling.

Furthermore, a certain configuration of the user interface device and/or the apparatus to be controlled via the user interface device may be automatically achieved by attaching the auxiliary appliance to the user interface device. Thus, the operations triggered by attaching the auxiliary appliance to the the user interface device may go beyond a simple recognition of a certain auxiliary appliance. Certain additional functions could be activated or certain procedures could be executed as for example activating a WLAN module integrated in the user interface device, coupling the user interface device to a server to which also the apparatus to be controlled is connected, establishing a connection between the user interface device and the apparatus, etc.

Ideally, the user may attach the auxiliary appliance e.g. on his tablet or the like without any visual contact, and the whole system including software and hardware, in particular including the apparatus to be controlled, will be started. Accordingly, the user is enabled to directly start operating the apparatus without having to look at the tablet.

Further, it is also conceivable e.g. that the software is only (re)configured by attaching the auxiliary appliance. For example, a software program for controlling a microscope may have been loaded before, and this software is now only adapted to an operation using the auxiliary appliance.

The touch portion of the haptic control element may be formed by a stylus configured to interact with the touch sensitive screen. In such a case, the touch sensitive screen may have a suitable sensing structure adapted to the stylus in order to detect a tip position thereof on the touch sensitive screen. For instance, the afore-mentioned sensing structure may be of capacitive or resistive type.

The at least one haptic control element may comprise at least one of a rotary knob, a push button, a switch, and a slider without being limited thereto.

In a preferred embodiment, the at least one haptic control element may be configured to provide tactile feedback by a click-stop configuration or a rasterization configuration. For instance, in case that the haptic control element is formed by a rotary knob, a rotating operation thereof may be sensed by the user by means of the respective configuration. The tactile feedback is based on the sense of touch, haptic perception and sensations such as tickling, movement, vibration, temperature, pressure and tension. Is to be noted that providing feedback to the user is not limited to configurations which provide for tactile feedback. Rather, acoustic feedback provided by a speaker, optical feedback provided by an illumination element etc. may also be applied, wherein the speaker and the illumination element may either be part of the user interface device or the auxiliary appliance. Further, a feedback may be provided to the user in an embodiment in which the touch sensitive screen overlapped with a semi-transparent auxiliary appliance is lid in a different color when operating the appliance.

According to another aspect, a user interface device is provided for controlling an apparatus using the auxiliary appliance. The user interface device comprises a touch sensitive screen configured to provide at least one touch control element in a predetermined screen area, wherein the touch control element is operable for controlling the apparatus by touching the touch sensitive screen in the predetermined screen area. The user interface device further comprises a processor which is configured to identify an application software module based on identification data provided by the auxiliary appliance and associated with the application software module and to control the touch sensitive screen based on the identified application software module for providing the at least one touch control element.

Preferably, the user interface device further comprises at least one device connector which is operatively connectable to the at least one appliance connector of the auxiliary appliance for transmitting data and/or power between the user interface device and the auxiliary appliance when the attachment portion is attached to the user interface device.

According to another aspect, a user interface system is provided which comprises an auxiliary appliance and a user interface device as described above.

According to another aspect, a system is provided which comprises an apparatus and at least one user interface system for controlling the apparatus.

It may be envisaged that the system comprises a plurality of user interface systems, each user interface system including an auxiliary appliance and an user interface device. For instance, in case that two user interface systems are provided for controlling the apparatus, the user may hold one user interface systems in his right hand and the other in his left hand when operating the apparatus.

The apparatus may comprise a microscope, e.g. a surgical microscope, a microtome, a spectroscope, a high pressure freezer and/or an automated pipetting system without being limited thereto. For instance, in the field of surgical microscopy, it must be as easy as possible for the surgeon to operate the microscope, and the surgeon's visual attention must not be wasted for checking the control elements on the touch sensitive screen. For this reason, even conventional systems primarily use physical switches and buttons and even foot pedals in addition to touch sensitive screens.

According to another aspect, a method is provided for controlling the user interface device, said method comprising following steps: identifying an application software module based on identification data provided by the auxiliary appliance and associated with the application software module; and controlling the touch sensitive screen of the user interface device based on the identified application software module for providing at least one graphical control element in a predetermined screen area.

### Short Description of the Figures

Hereinafter, specific embodiments are described referring to the drawings, wherein:
Figure 1 shows a system comprising a microscope and a user interface device according to an embodiment;
Figure 2 is a perspective view showing an auxiliary appliance according to an embodiment and the user interface device in a state in which the auxiliary appliance and the user interface device are separated from each other;
Figure 3 is a diagram view illustrating a one-to-one assignment between haptic control elements of the auxiliary appliance and touch control elements provided by the user interface device;
Figure 4 is a perspective view showing the user interface device inserted into the auxiliary appliance;
Figure 5 is a plan view showing the user interface device inserted into the auxiliary appliance;
Figure 6 is a side view showing the user interface device inserted into the auxiliary appliance;
Figure 7 is another side view showing the user interface device inserted into the auxiliary appliance;
Figure 8 is a perspective view showing the user interface device inserted into the auxiliary appliance with a removed haptic control element;
Figure 9 is a perspective view illustrating a positional relationship between the haptic control elements of the auxiliary appliance in the touch sensitive screen of the user interface device;
Figure 10 is a perspective view showing the haptic control elements according to a specific embodiment;
Figure 11 is a perspective exploded view showing the user interface device and an auxiliary appliance according to another embodiment in a state in which the user interface device in the auxiliary appliance are separated from each other;
Figure 12 is another perspective exploded view showing the user interface device and the auxiliary appliance separated from each other;
Figure 13 is a perspective view showing the user interface device and the auxiliary appliance attached to each other; and
Figure 14 shows a schematic illustration of a system configured to perform a method described therein.

### Detailed Description

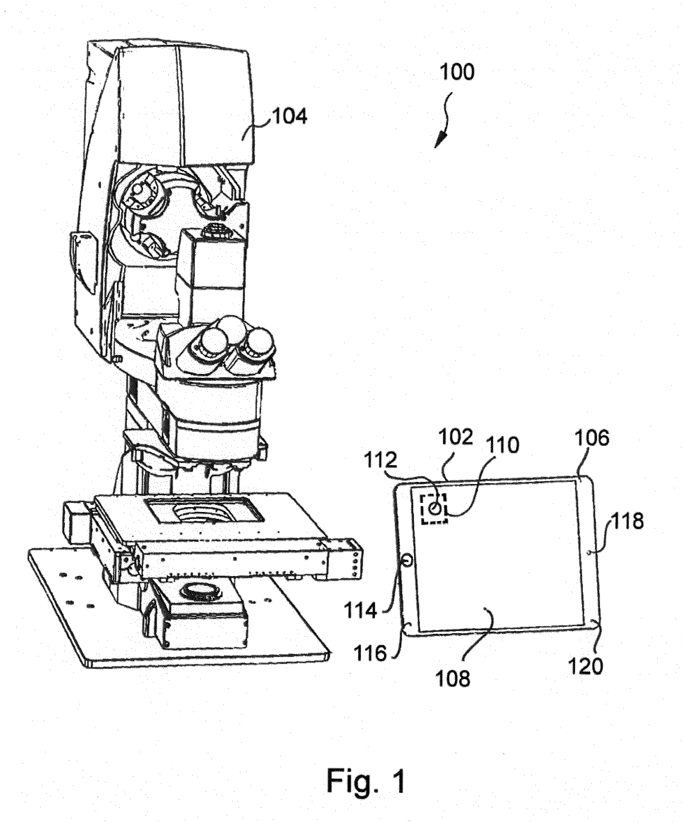

Figure 1 shows a system 100 comprising a user interface device 102 and an apparatus 104 which can be controlled by means of the user interface device 102. According to the embodiment shown in Figure 1, the user interface device 102 is formed by a tablet computer without being limited thereto. Further, the apparatus 104 may be formed by a microscope without being limited thereto either.

In order to enable the user interface device 102 and the microscope 104 to communicate with each other, suitable connectivity is established between the user interface device 102 and the microscope 104. Specifically, the user interface device 102 and the microscope 104 may utilize wired and/or wireless transmission for exchanging data and control signals. For instance, as an alternative or in addition to conventional wired connection between the user interface 102 and the microscope 104, wireless transmission may be applied according to a wireless technology standard using short-wavelength UHF radio waves ("Bluetooth"). Needless to say that wired or wireless communication of any other type as for example WLAN may be utilized for controlling the microscope 104 by means of the user interface device 102.

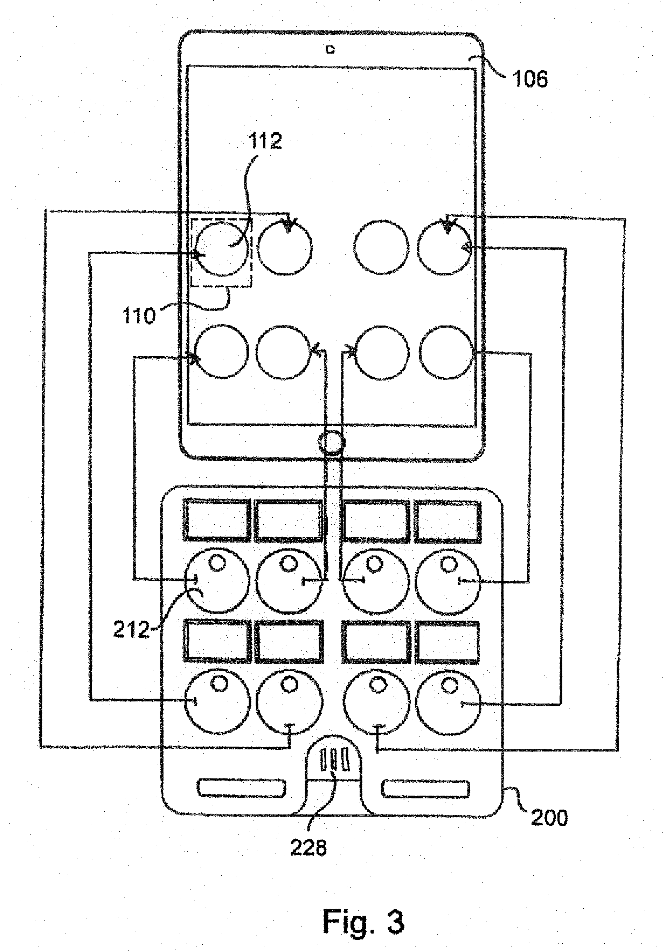

The user interface device 102 comprises a casing 106 including a touch sensitive screen 108 which serves as both an input device and an output device. As explained below in more detail, a user is enabled to control the microscope 104 by touching the touch sensitive screen 108 on predetermined screen areas 110, each screen area 110 providing a touch control element 112 which is actuated by the user to perform a distinct control operation. For simplicity, Figure 1 shows only one screen area 110 including one control element 112. However, a plurality of screen areas may be provided, each of which including a distinct control element (see Figure 3).

Each of the touch control elements 112 may be graphical user interface (GUI) element, i.e. an element which is graphically represented by a symbol displayed on the touch sensitive screen 108. However, the touch control element 112 is not limited to a GUI element which is visibly displayed on the touch sensitive screen 108. As will become apparent below, in an operating state of the configuration disclosed herein, the touch control element 112 may be hidden and therefore not visible so that graphical representation of the touch control element 112 on the touch sensitive screen 108 is not required.

The user interface device 102 comprises a processor which is configured to control the microscope 104 in response to touching the touch sensitive screen 108 in the respective screen area 110 for activating the touch control element 112 provided therein. In order to control the microscope 104, the processor of the user interface device 102 may utilize an application software module stored in a memory of the user interface device 102.

According to the embodiment shown in Figure 1, the user interface device 102 comprises an ON/OFF button 114 located on a lower end 116 of the casing 106, the ON/OFF button 112 being pressed by the user to turn on the touch sensitive screen 108. Further, the user interface device 102 may comprise an integrated camera 118 located on an upper end 120 of the casing 106.

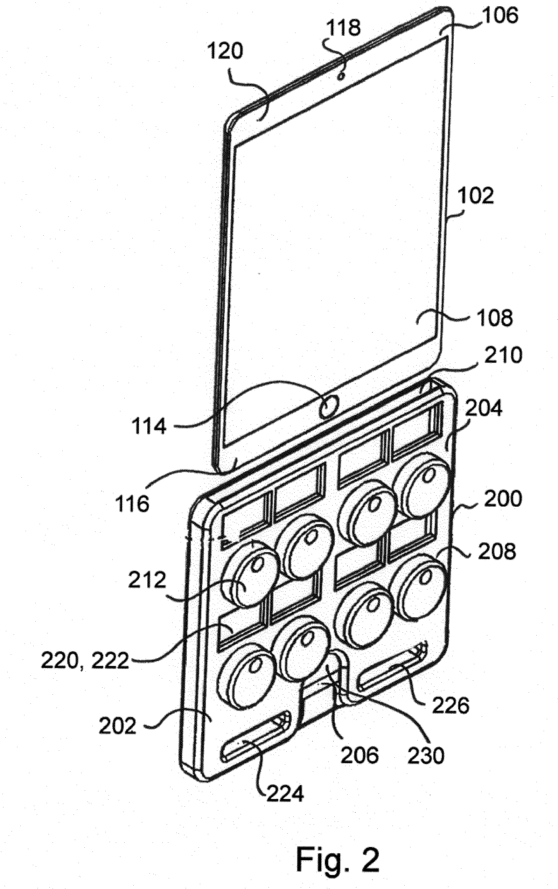

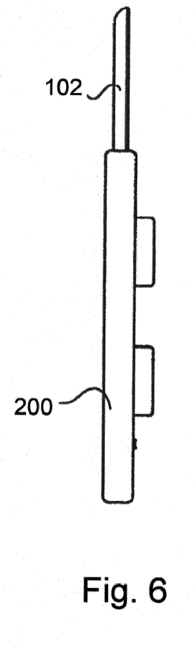

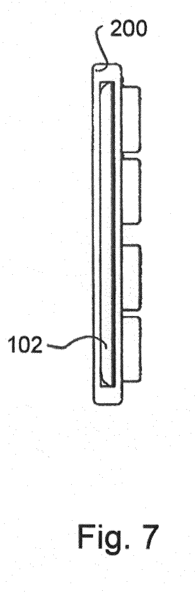

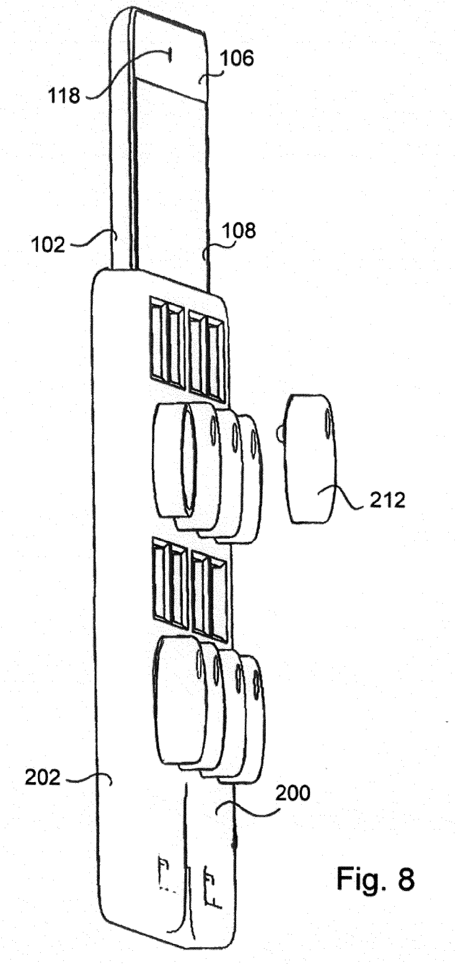

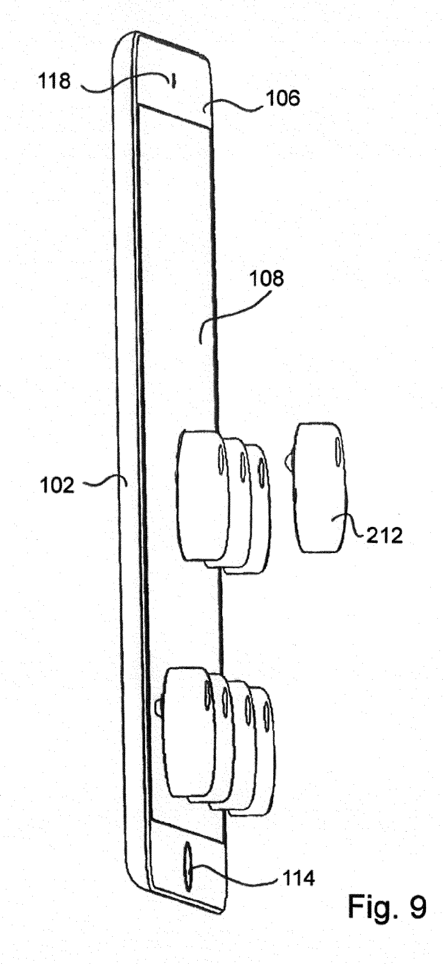

With reference to Figures 2 to 10, an auxiliary appliance 200 according to a specific embodiment is described, said auxiliary appliance 200 being adapted to interact with the user interface device 102 for controlling the microscope 104 as disclosed hereinafter. Specifically, Figures 2 and 3 show the functional unit formed by the auxiliary appliance 200 and the user interface 102 in a decoupled state, and Figures 2 to 8 show the functional unit in a coupled state.

The auxiliary appliance 200 is configured to be easily attached to and removed from the user interface device 102. For this, the auxiliary appliance 200 has an attachment portion 202 which is adapted to an outer shape of the casing 106 of the user interface device 102. According to the specific embodiment illustrated in Figures 2 to 10, the attachment portion 202 is formed by a slide-in sheath 204 which has an insertion opening 210 for inserting the user interface device 102 into an interior of the slide-in sheath 204 (see Figure 2). The interior of the slide-in sheath 204 and the insertion opening 210 communicating therewith are adapted in their dimensions to the tablet shape of the casing 106 of the user interface device 102.

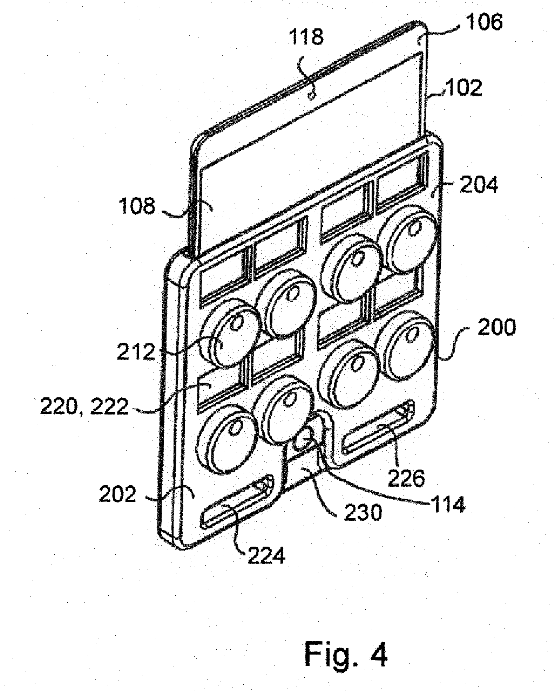

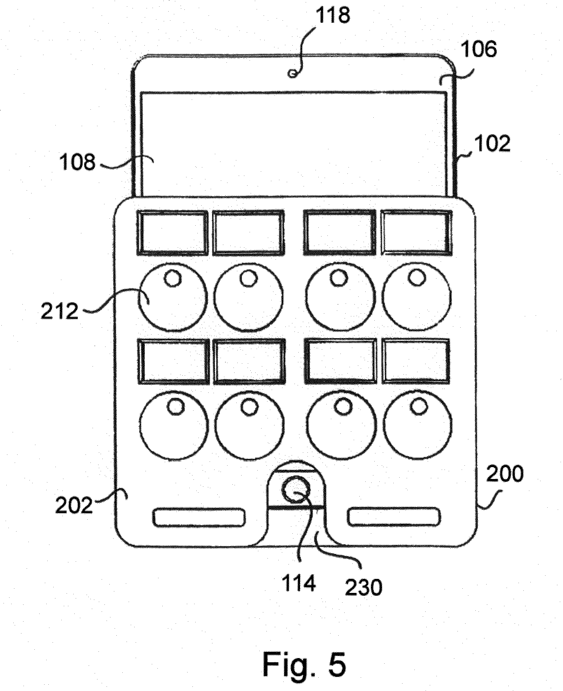

As can be seen in Figures 4 and 5, a lower part of the touch sensitive screen 106 is accommodated within the slide-in sheath 204 of the auxiliary appliance 200 in an operating state in which the casing 106 of the user interface device 102 is inserted into the slide-in sheath 2044 in order to couple the auxiliary appliance 200 with the user interface device 102. When completely inserted into the sheath 204, the lower end 116 of the casing 106 abuts against a stop 206 (see Figure 2) formed in the interior of the slide-in sheath 204 at a lower end portion thereof. Accordingly, a front portion of the slide-in sheath 204 forming a screen cover 208 overlaps only the lower part of the touch sensitive screen 106 when the user interface device 102 is inserted into the auxiliary appliance 200.

According to the embodiment shown in Figures 2 to 10, the slide-in sheath 204 forming the attachment portion 202 of the user interface device 102 is made from a non-transparent material, for instance plastics. Accordingly, the lower part the touch sensitive screen 106 is mostly hidden behind the screen cover 208 of the auxiliary appliance 200 when inserted therein. However, the slide-in sheath 204 is not limited to such a non-transparent configuration. Rather, at least the screen cover 208 may also be formed from a transparent material so that the lower part of the touch sensitive screen 106 is visible through the screen cover 208 when inserted into the auxiliary appliance 200.

The auxiliary appliance 200 comprises a plurality of haptic control elements 212 provided on the screen cover 208. The haptic control elements 212 are configured to be superimposed on the touch sensitive screen 108 of the user interface device 102 in the predetermined screen areas 110 of the touch sensitive screen 108 including the touch control elements 112. Specifically, each of the haptic control elements 212 of the auxiliary appliance 200 overlaps one of the predetermined screen areas 110 when the user interface device 102 is inserted into the auxiliary appliance 200. Thus, a one-to-one assignment between each of the haptic control elements 212 of the auxiliary appliance 200 and the touch control elements 112 provided in the predetermined screen areas 110 of the touch sensitive screen 108 is established as illustrated in diagram of Figure 3 showing the auxiliary appliance 200 and the user interface device 102 in a decoupled state.

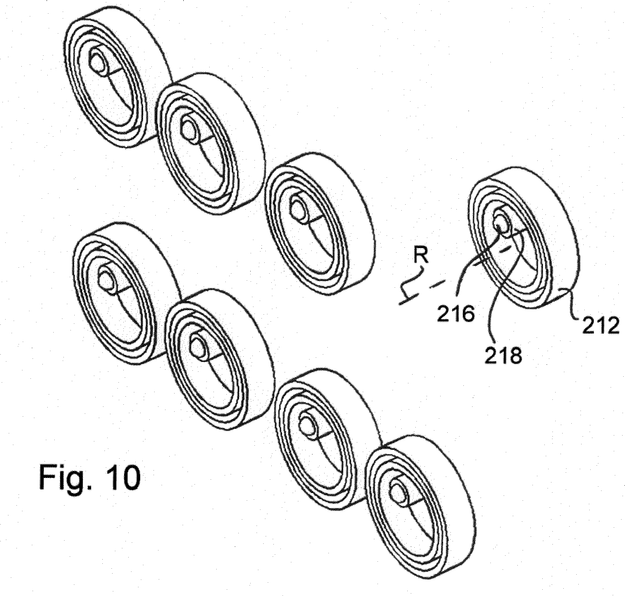

In the specific embodiment shown in Figures 2 to 10, each of the haptic control elements 212 of the auxiliary appliance 200 is formed by a rotary knob 214. The rotary knob 214 is to be rotated by the user to execute a specific control operation assigned to the touch control element 112 which is overlapped by the corresponding haptic control element 212 of the auxiliary appliance 200 when the user interface device 102 is inserted into the auxiliary appliance 200. As shown in Figure 10, each haptic control element 212 comprises a touch portion 216 which is configured to touch the touch sensitive screen 108 in the screen area 110 of the touch sensitive screen 108 in which the touch control element 112 assigned to the respective haptic control element 212 is provided. Specifically, the touch portion 216 of the rotary knob 214 forming the haptic control element 212 may be located on a shaft 218 which is provided inside the rotary knob 214 to face the touch sensitive screen 108. The shaft 218 is eccentrically located with respect to a central axis R about which the rotary knob 124 is rotated.

The touch portion 216 provided on the rotary knob 214 comes into contact with the touch sensitive screen 108 when the user interface device 102 is inserted into the auxiliary appliance 200. Thus, when rotating the rotary knob 214, the touch portion 216 moves on the touch sensitive screen 108 along a circle track within the respective screen area 110 so that the rotating operation of the rotary knob 214 is transferred via the touch portion 216 to the touch control element 112 which belongs to the rotary knob 214. Accordingly, the control operation assigned to the touch control element 112 is executed by rotating the rotary knob 214.

For instance, the touch portion 216 of the haptic control element 212 may be formed by a stylus which is configured to interact with the touch sensitive screen 108. Such a stylus is formed by a small pen-shaped instrument whose tip position on the touch sensitive screen 108 can be detected by a suitable sensing structure which is integrated into the touch sensitive screen 108. The sensing structure and the stylus are adapted to each other in order to enable detection of the tip position on the touch sensitive screen 108. For example, the touch sensitive screen 108 may comprise a capacitive sensing structure, preferably of a PCT type (PCT: projected capacitive touch). Alternatively, a resistive sensing structure and a stylus adapted thereto may be used.

Further, a passive stylus or an active stylus may be used, the latter including an electric energy source and preferably electronic components providing additional functions to the user going beyond the detection of the tip position. An active stylus may be used to enable the haptic control elements to be pressed with different pressing forces.

Each of the rotary knobs 214 may be configured to provide haptic feedback when rotated by the user. For this, the rotary knob 214 may have a click-stop configuration or a rasterization configuration facilitating an actuation of the rotary knob 214 without any visual evaluation. In particular, such a configuration enables the user to adjust discrete values in accordance with predetermined rotational positions of the rotary knob 214 easily.

According to the embodiment shown in Figures 2 to 10, the screen cover 208 of the auxiliary appliance 200 has a plurality of viewing windows 220 through which portions 222 of the touch sensitive screen 108 of the user interface device 102 are visible for the user. Accordingly, the portions 222 of the touch sensitive screen 108 may be used to display specific information which can be acquired by the user when looking at the corresponding viewing windows 220. In particular, each of the viewing windows 220 may be used to visibly display information corresponding to an adjustment state of the rotary knob 214 which is directly located below the viewing window 220.

Further, the screen cover 208 of the auxiliary appliance 200 may have a microphone window 224 and a speaker window 226 which are configured to overlap a microphone and a speaker provided on the user interface device 102 (not shown in Figures), respectively, when the user interface device 102 is inserted into the auxiliary appliance 200. In addition, the screen cover 208 may be provide with a button opening 230 through which the ON/OFF button 114 accessible to the user.

As shown in Figure 3, the auxiliary appliance 200 may have at least one appliance connector 228 which is connectable to a corresponding device connector (not shown in the Figures) provided on a lower rear side of the casing 106 of the user interface device 102. The aforementioned connectors are formed by electrical contacts elements which are brought into contact with the user interface device 102 is inserted into the auxiliary appliance 200. The contact elements may be used for transmitting data and/or power between the auxiliary appliance 200 and the user interface device 102. In particular, the contact elements enable the user interface device 102 to be electrically powered via the auxiliary appliance 200.

In particular, the appliance connector 228 and the corresponding device connector provided on the user interface device 102 enable the auxiliary appliance 200 to be automatically identified by the user interface device 102 and activated at the time of inserting the user interface device 102 into the auxiliary appliance 200. For this, the processor provided in the user interface device 102 may identify and start an application software module based on identification data provided by the auxiliary appliance 200. The identification data represents information which allows the processor of the user interface device 102 to identify the specific auxiliary appliance 200 to be used in combination with the user interface device 102.

There is a number of options for identifying the auxiliary appliance 200 and the application software module assigned thereto. It is a simple option for the user to identify the auxiliary appliance by means of a manual input to the user interface device 102.To name just a few other options, the auxiliary appliance 200 and the application software module can be identified based on identification data indicating the number and/or the positions of the haptic control elements 212 provided on the auxiliary appliance 200. Further, the auxiliary appliance 200 may have light sensors which can be illuminated by luminous elements, said luminous elements being formed by dedicated light sources provided on the user interface device 102 or simply by luminous pixels displayed on the touch sensitive screen 108. In such a case, specific patterns, colors, frequencies, etc. of the illumination light detected by the light sensors may serve for encoding the identification data based on which the auxiliary appliance 200 is to be identified. Another option is to use dedicated touch elements provided on the auxiliary appliance 200 which are detected by the touch sensitive screen 108. Further, dedicated near-field communication (NFC) elements, Bluetooth elements and/or electrical contacts such as USB contacts are applicable for identifying the auxiliary appliance 200. As an alternative or in addition, the camera 118 of the user interface device 102 may be used to evaluate identification data e.g in the form of a barcode, a hole pattern, etc. provided on the auxiliary appliance 200. In such a case, the user interface device 102 may be inserted in an upside-down orientation into the slide-in sheath 204 of the auxiliary appliance 200 according to the specific embodiment shown in Figures 2 to 10 so that the upper end 120 of the casing 106 including the camera 118 is inserted into the sheath 204.

In each of the options explained above, the user is not required to perform any step for identifying and activating the auxiliary appliance going beyond simply inserting the user interface device 102 into the sheath 204.

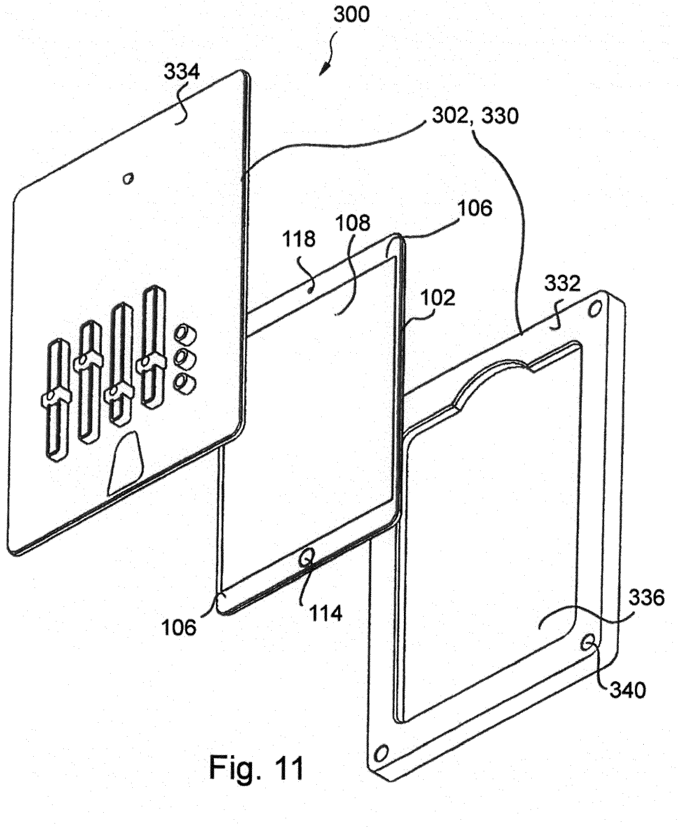

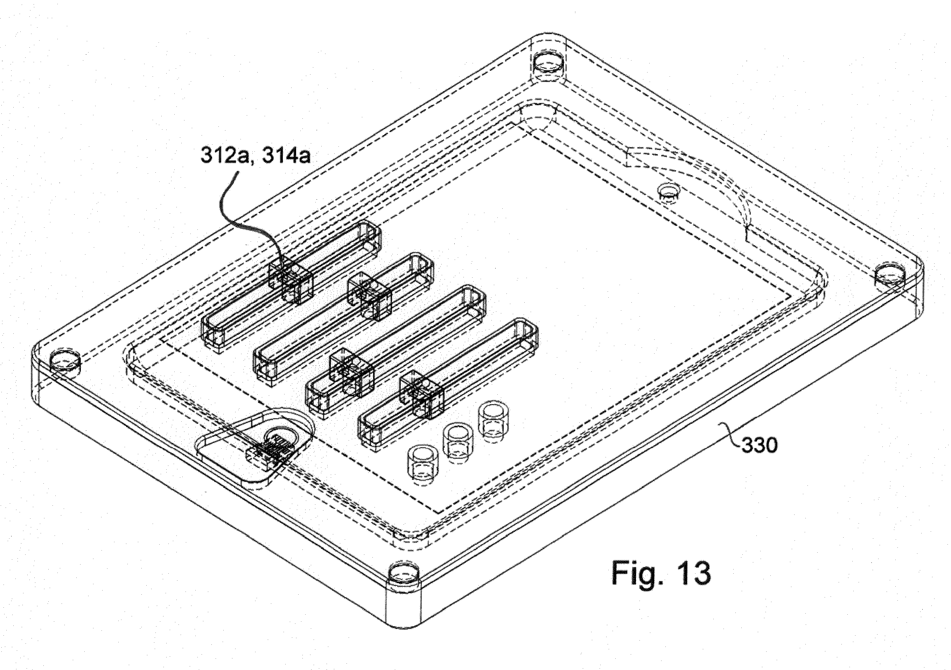

Hereinafter, with reference to Figures 11 to 13, an auxiliary appliance 300 according to another embodiment is described. Like the auxiliary appliance 200 shown in Figures 2 to 10, the auxiliary appliance 300 described below is configured to be combined with the user interface device 102 in order to enable the user to control the microscope 104 by means of the user interface device 102 without requiring any visual check. In principle, the auxiliary appliance 300 interacts with the user interface device 102 in a manner as already explained above. Accordingly, unless otherwise explained below, the technical features and effects disclosed above with respect to the configuration illustrated in Figure 2 to 10 also apply to the auxiliary appliance 300 of Figures 11 to 13. Essentially, the auxiliary appliance 300 differs from the auxiliary appliance 200 shown in Figures 2 to 10 by its attachment portion 302.

The attachment portion 302 of the auxiliary appliance 300 is formed by a dual panel structure 330 including a base panel 332 and a cover panel 334. The base panel 332 is adapted to the outer shape of the casing 106 of the user interface device 102. Specifically, the base panel 332 may have a recess 336, the dimensions thereof being adapted to the dimensions of the casing 106 of the user interface device 102 such that casing 106 can be accommodated in the recess 336. Once the casing 106 is put into the recess 336 of the base panel 332, the cover panel 334 is put onto the base panel 332 accommodating the casing 106 and coupled to the base panel 332. When coupled to the base panel 332, the cover panel 334 overlaps the user interface device 102 in its entirety so that the touch sensitive screen 108 is completely covered by the cover panel 334.

The attachment portion 302 comprises a coupling device which is configured to attach the cover panel 334 onto the base panel 332 in a state in which the user interface device 102 is accommodated in the recess 336 of the base panel 332. The coupling device may comprise four magnetic coupling elements 340, each of which being located at a corner of the rectangular base panel 332. In this case, the coupling device further comprises four magnetic coupling elements 342, each of which being located at a corner of the rectangular cover panel 334. When the cover panel 334 is laid onto the base panel 332, the magnetic coupling elements 340, 342 are superimposed in pairs and magnetically attracted to each other so that the user interface device 102 accommodated in the recess 336 is sandwiched between the panels 332, 334.

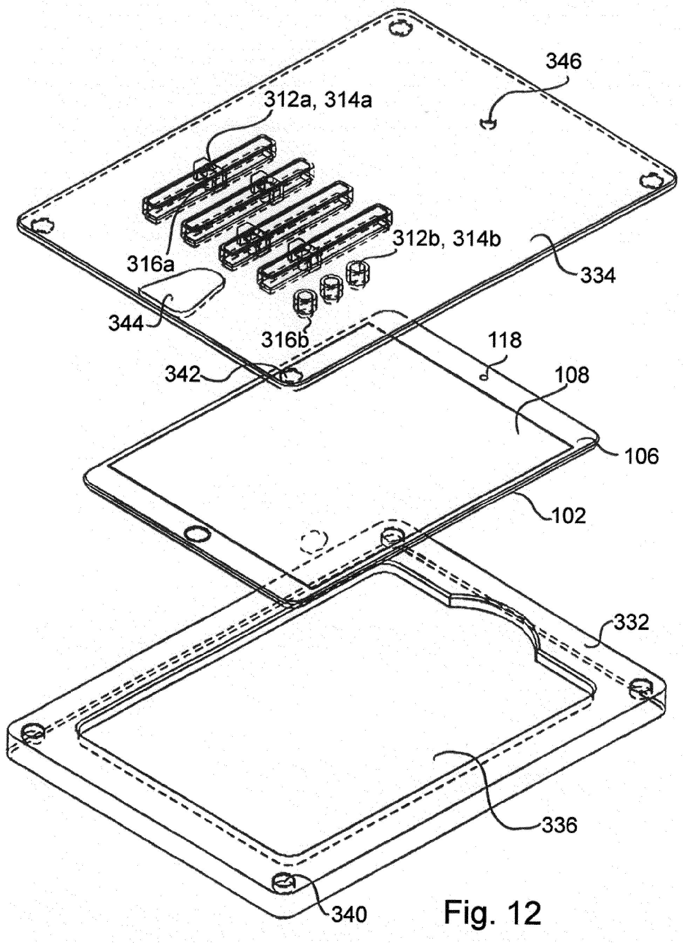

The cover panel 334 forms a screen cover which completely overlaps the touch sensitive screen 108 of the user interface device 102. In order to make the touch sensitive screen overlapped by the cover panel 334 visible for the user, the cover panel 334 may be made from a transparent material. The cover panel 334 comprises a plurality of first haptic control elements 312a, each of which being formed as a slider 314a. Further, the cover panel 334 comprises second haptic control elements 312b, each of which being formed as a push button 314b. As can been seen in the exploded view of Figure 12, each of the haptic control elements 312a, 312b includes a touch portion 316a, 316b which is in contact with the touch sensitive screen 108 when the user interface device 102 is sandwiched between the base panel 332 and the cover panel 334.

In the operating state, in which the user interface device 102 and the auxiliary appliance 300 are coupled to each other, the touch portions 316a, 316b of the haptic control elements 312a, 312b are superimposed on the touch sensitive screen 108 in predetermined screen areas in which touch control elements are provided as explained above with reference to Figures 2 to 10. The haptic control elements and the touch control elements provided on the touch sensitive screen 108 according to the embodiment shown in Figures 11 to 13 interact with each other the same way as described above with respect to the haptic control elements 212 and the touch control elements 112 of the auxiliary appliance 200 shown in Figures 2 to 10. Accordingly, the auxiliary appliance 300 allows the user to control the microscope 104 by means of the user interface device 102 without requiring any visual check. The cover panel 334 of the auxiliary appliance 300 may have a camera window 346 which overlaps the camera 118 of the user interface device 102 when the user interface device 102 is sandwiched between the panels 332 and 334. Thus, the operation of camera 118 is not affected by the cover panel 334.

Further, the cover 334 of the auxiliary appliance 300 comprises a button window opening 344 through which the ON/OFF button 114 of the user interface device 102 is freely accessible to the user.

The embodiments described above are to be understood merely as examples. In particular, it is to be noted that the features disclosed in the embodiment illustrated in Figures 2 to 10 may also be applied to the embodiment illustrated in Figures 11 to 13 and vice versa. For instance, the haptic control elements 212 of the auxiliary appliance 200 shown in Figures 2 to 10 are formed by rotary knobs whereas the haptic control elements 312a, 312b of the auxiliary appliance 300 shown in Figures 11 to 13 are formed by sliders and push buttons, respectively. It is evident that the haptic control elements disclosed above can be interchanged between the embodiments or provided in any suitable combination. Further, any other type of haptic control element can be applied.

According to the embodiments described above, the user interface device 102 is formed by a tablet computer. Needless to say that any other type of interface device provided with the touch sensitive screen may be applied, for instance a smartphone. Further, the apparatus to be controlled as described above is not limited to a microscope. Any other type of apparatus can be controlled by means of the proposed combination of user interface device and auxiliary appliance, for instance a microtome or a spectroscope.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

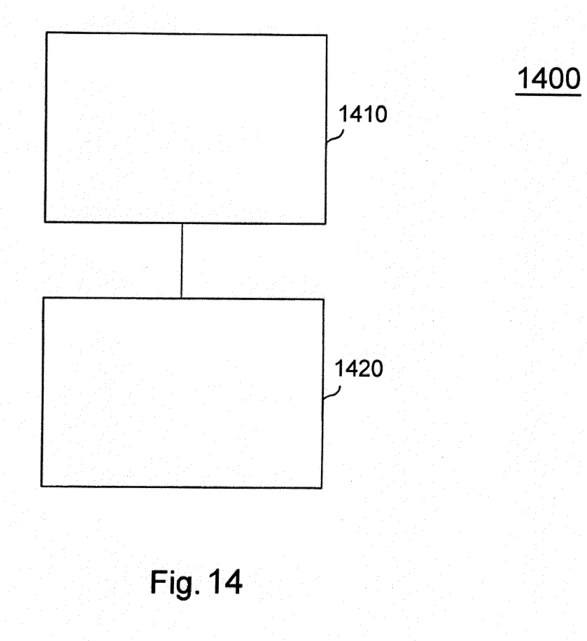

Some embodiments relate to a microscope comprising a system as described in connection with one or more of the Figs. 1 to 13. Alternatively, a microscope may be part of or connected to a system as described in connection with one or more of the Figs. 1 to 13. Fig. 14 shows a schematic illustration of a system 1400 configured to perform a method described herein. The system 1400 comprises a microscope 1410 and a computer system 1420. The microscope 1410 is configured to take images and is connected to the computer system 1420. The computer system 1420 is configured to execute at least a part of a method described herein. The computer system 1420 may be configured to execute a machine learning algorithm. The computer system 1420 and microscope 1410 may be separate entities but can also be integrated together in one common housing. The computer system 1420 may be part of a central processing system of the microscope 1410 and/or the computer system 1420 may be part of a subcomponent of the microscope 1410, such as a sensor, an actor, a camera or an illumination unit, etc. of the microscope 1410.

The computer system 1420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 1420 may comprise any circuit or combination of circuits. In one embodiment, the computer system 1420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 1420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 1420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 1420 may also include a display device, one or more speakers, and a keyboard and/or controller, which can include a mouse, trackball, touch screen, voice-recognition device, or any other device that permits a system user to input information into and receive information from the computer system 1420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example an HDD, an SSD, a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of Reference Signs

- 100: system
- 102: user interface device
- 104: microscope
- 106: casing
- 108: touch sensitive screen
- 110: screen area
- 112: touch control element
- 114: ON/OFF button
- 116: lower end
- 118: camera
- 120: upper end
- 200: auxiliary appliance
- 202: attachment portion
- 204: sheath
- 206: stop
- 208: screen cover
- 210: insertion opening
- 212: haptic control element
- 214: rotary knob
- 216: touch portion
- 218: shaft
- 220: viewing window
- 222: portions of the touch sensitive screen
- 224: microphone window
- 226: speaker window
- 228: appliance connector
- 230: button opening
- 300: auxiliary appliance
- 312a: haptic control element
- 312b: haptic control element
- 314a: slider
- 314b: push button
- 330: dual panel structure
- 332: base panel
- 334: cover panel
- 336: recess
- 340: coupling element
- 342: coupling element
- 344: button opening
- 346: camera window

## Claims

1. An auxiliary appliance (200, 300) for a user interface device (102) having a touch sensitive screen (108), said auxiliary appliance (200, 300) comprising:
at least one haptic control element (212, 312a, 312b) configured to be manually operated by a user,
an attachment portion (202, 302) configured to be attached to the user interface device (102) for superimposing the haptic control element (212, 312a, 312b) on the touch sensitive screen (108) of the user interface device (102) in a predetermined screen area (110) where a touch control element (112) is provided on the touch sensitive screen (108), said touch control element (112) being operable by touching the touch sensitive screen (108) in said predetermined screen area (110),
wherein the haptic control element (212, 312a, 312b) comprises a touch portion (216, 316a, 316b) configured to touch the touch sensitive screen (108) in said predetermined screen area (110) for operating the touch control element (112) in response to a manual user operation of the haptic control element (212, 312a, 312b) when the attachment portion (202, 302) is attached to the user interface device (102).

2. The auxiliary appliance (200, 300) according to claim 1, further comprising a screen cover (208) including the at least one haptic control element (212, 312a, 312b), said screen cover (208) being adapted to cover at least a part of the touch sensitive screen (108) when the attachment portion is attached to the user interface device (102).

3. The auxiliary appliance (200) according to claim 1 or 2, wherein the attachment portion (202) is formed by a slide-in sheath (204) having an insertion opening (210) for inserting the user interface device (102) into an interior of the slide-in sheath (204).

4. The auxiliary appliance (300) according claim 1 or 2, wherein the attachment portion (302) comprises a dual panel structure (330) formed by a base panel (332) and a cover panel (334), and a coupling device (340, 342) configured to detachably connect the base panel (332) and the cover panel (334),
wherein the base panel (332) is configured to accommodate the user interface device (102), and the cover panel (334) is configured to cover the touch sensitive screen (108) fully or in part when the attachment portion (302) is attached to the user interface device (108).

5. The auxiliary appliance (300) according to claim 4, wherein the coupling device comprises at least first and second magnetic coupling elements (340, 342), said first magnetic coupling element (340) being located on the base panel (332) and said second magnetic coupling element (342) being located on the cover panel (344), wherein the first and second magnetic coupling elements (340, 342) are magnetically coupled to each other when the base panel (332) and the cover panel (334) are connected.

6. The auxiliary appliance (200, 300) according to any one of the preceding claims, further comprising at least one appliance connector (228) which is operatively connectable to at least one device connector of the user interface device (102) for transmitting data and/or power between the auxiliary appliance (200, 300) and the user interface device (102) when the attachment portion (202, 302) is attached to the user interface device (102).

7. The auxiliary appliance (200, 300) according to any one of the preceding claims, wherein the touch portion (216, 316a, 316b) of the haptic control element (212, 312a, 312b) is formed by a stylus configured to interact with the touch sensitive screen (108).

8. The auxiliary appliance (200, 300) according to any one of the preceding claims, wherein the at least one haptic control element (212, 312a, 312b) comprises at least of a rotary knob (214), a push button (314b), a switch, a slider (314a).

9. The auxiliary appliance (200, 300) according to any one of the preceding claims, wherein the at least one haptic control element (212, 312a, 312b) is configured to provide tactile feedback by a click-stop configuration or a rasterization configuration.

10. A user interface device (102) for controlling an apparatus (104) using the auxiliary appliance (200, 300) according to any one of the preceding claims, comprising:
a touch sensitive screen (108) configured to provide at least one touch control element (112) in a predetermined screen area (110), said touch control element (112) being operable for controlling the apparatus (104) by touching the touch sensitive screen (108) in said predetermined screen area (110), and
a processor configured to identify an application software module based on identification data provided by the auxiliary appliance (200, 300) and associated with said application software module and to control the touch sensitive screen (108) based on the identified application software module for providing the at least one touch control element (112) in said predetermined screen area (110).

11. The user interface device (102) according to claim 10, further comprising at least one device connector which is operatively connectable to the at least one appliance connector (228) of the auxiliary appliance (200, 300) for transmitting data and/or power between the user interface device (102) and the auxiliary appliance (200, 300) when the attachment portion (202, 302) is attached to the user interface device (102).

12. A user interface system, comprising the auxiliary appliance (200, 300) according to one of the claims 1 to 9 and the user interface device (102) according to claim 10 or 11.

13. A system (100), comprising an apparatus (104) and at least one user interface system according to claim 12 for controlling the apparatus (104).

14. The system (100) according to claim 13, wherein the apparatus comprises a microscope (104) and/or a microtome and/or a spectroscope.

15. A method for controlling the user interface device (102) according to claim 10 or 11, comprising following steps:
identifying an application software module based on identification data provided by the auxiliary appliance (200, 300) and associated with said application software module, and
controlling the touch sensitive screen (108) of the user interface device (102) based on the identified application software module for providing at least one touch control element (112) in a predetermined screen area.

16. A computer program with a program code for performing the method according to claim 15, when the computer program is run on a processor.
